(19) Europäisches Patentamt / European Patent Office / Office européen des brevets

(11) **EP 1 936 939 B1**

(12) **EUROPEAN PATENT SPECIFICATION**

(45) Date of publication and mention
of the grant of the patent:
**24.08.2011  Bulletin 2011/34**

(51) Int Cl.:
*H04M 9/08* (2006.01)

(21) Application number: **06026232.6**

(22) Date of filing: **18.12.2006**

(54) **Low complexity echo compensation**

Echokompensation mit geringer Komplexität

Annulation d'écho de faible complexité

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**25.06.2008  Bulletin 2008/26**

(73) Proprietor: **Harman Becker Automotive Systems
GmbH
76307 Karlsbad (DE)**

(72) Inventors:
• **Buck, Markus
88400 Biberach (DE)**
• **Haulick, Tim
89143 Blaubeuren (DE)**
• **Rössler, Martin
89077 ULm (DE)**
• **Schmidt, Gerhard
89077 Ulm (DE)**
• **Schnug, Walter
87700 Memmingen (DE)**

(74) Representative: **Grünecker, Kinkeldey,
Stockmair & Schwanhäusser
Anwaltssozietät
Leopoldstrasse 4
80802 München (DE)**

(56) References cited:
WO-A-93/17510          US-A1- 2006 062 380
US-A1- 2006 067 518   US-B1- 6 421 377

## Description

**Field of the Invention**

The present invention relates to a system and a method for signal processing, in particular, speech signal processing, with acoustic echo compensation. The invention particularly relates to echo compensation by processing of down-sampled sub-band signals.

**Background of the Invention**

Echo compensation is a basic topic in audio signal processing in communication systems comprising microphones that detect not only the wanted signal, e.g., a speech signal of a user of a speech recognition system or a hands-free telephony set, but also disturbing signals output by loudspeakers of the same communication system that are installed in the same room as the microphones. In case of a hands-free set, e.g., it has to be avoided that signals received from a remote party and output by loudspeakers at the near end are fed again in the communication system by microphones at the near end and transmitted back to the remote party. Detection of signals by the microphones that are output by the loudspeakers can result in annoying acoustic echoes that even may cause a complete breakdown of the communication, if the acoustic echoes are not significantly attenuated or substantially removed.

In the case of a speech recognition system used in a noisy environment a similar problem occurs. It has to be prevented that signals different from the speech signals of a user are supplied to the recognition unit. The microphone (s) of the speech recognition system, however, might detect loudspeaker outputs representing, e.g., audio signals reproduced by audio devices as CD or DVD player or a radio. If these signals were not sufficiently filtered, the wanted signal representing the utterance of a user would probably be embedded in noise to a degree that renders appropriate speech recognition impossible.

Several methods for echo compensation have been proposed and implemented in communication systems in recent years. Adaptive filters are employed for echo compensation of acoustic signals (see, e.g., Acoustic Echo and Noise Control, E. Hänsler and G. Schmidt, John Wiley & Sons, New York, 2004) that are used to model the transfer function (impulse response) of the loudspeaker-room-microphone (LRM) - system by means of an adaptive finite impulse response (FIR) filter.

US 2006/062380 A1 discloses a method for echo cancellation employing a donw-sampler low-pass-filter and an up-sampler for up-sampling a residual echo signal determined by an acoustic echo canceller by zero padding.

WO 93/17510 A discloses an echo canceller that subtracts an echo estimate from a microphone signal wherein the ratio of the energy of the microphone signal to the energy of a loudspeaker signal is taken into account.

One well-known method for adapting the echo compensation filter is based on the Normalized Least Mean Square algorithm. However, convergence is known to be usually rather slow in the case of speech signals, since consecutive signal sample are often correlated. Acceleration of the convergence characteristics, on the other hand, demands for relatively high computing resources in terms of memory capacities and processor load. In order to contain the need for high-performance computational means to a reasonable level, the signal processing is usually performed in a down-sampled sub-band regime in which the computational complexity, in principle, can be reduced as compared to the full-band processing.

The higher the down-sampling factor of the sub-band signals that are processed for echo compensation is selected the more the computation costs can be reduced. However, in the art the choice of an appropriate down-sampling factor is generally limited by the known problem of aliasing. Hann windows or other filters chosen show different aliasing characteristics. Artifacts increase with increasing down-sampling factor and, moreover, the echo damping rate is insufficient when the down-sampling factor exceeds some threshold.

Thus, despite the engineering progress in recent years there is still a problem in efficient echo compensation of audio signals with a tolerable time-delay and, in particular, echo compensation in verbal hands-free communication.

**Description of the Invention**

The above mentioned problem is solved or at least alleviated by a method for echo compensation in a loudspeaker-room-microphone system. At least one microphone signal ($y(n)$) comprising an echo signal contribution ($d(n)$) due to a loudspeaker signal ($x(n)$) is echo compensated. The provided method according to claim 1 comprises the steps of dividing at least a part of the at least one microphone signal ($y(n)$) into a predetermined number of sub-bands to obtain microphone sub-band signals and down-sampling each of said microphone sub-band signals by a first down-sampling factor ($r$) to obtain down-sampled microphone sub-band signals ($y_\mu(n)$);

dividing the loudspeaker signal ($x(n)$) into said predetermined number of sub-bands to obtain loudspeaker sub-band signals and down-sampling each of said loudspeaker sub-band signals by a second down-sampling factor ($r_1$) being

less than the first down-sampling factor (r) to obtain first loudspeaker sub-band signals;

storing the first loudspeaker sub-band signals;

folding each of the first loudspeaker sub-band signals with an estimate of the impulse response of the loudspeaker-room-microphone system in the corresponding sub-band to obtain folded loudspeaker sub-band signals;

down-sampling each of the folded loudspeaker sub-band signals by a third down-sampling factor ($r_2$) to obtain estimated echo contribution sub-band signals ($\hat{d}_\mu(n)$), the third downsampling factor ($r_2$) being set to a value so that the first down-sampling factor (r) is the product of the second ($r_1$) and third ($r_2$) downsampling factors;

subtracting each of the estimated echo contribution sub-band signals ($\hat{d}_\mu(n)$) from its corresponding down-sampled microphone sub-band signal ($y_\mu(n)$) to obtain error sub-band signals ($e_\mu(n)$);

down-sampling each of the stored first loudspeaker sub-band signals by said third downsampling factor ($r_2$) to obtain second loudspeaker sub-band signals; and

updating the estimate of the impulse response of the loudspeaker-room-microphone system in each sub-band based on the corresponding second loudspeaker sub-band signal at a rate that is equal to the sampling rate of said second loudspeaker sub-band signals.

The sub-band signals ($e_\mu(n)$) that represent echo compensated microphone sub-band signals can subsequently be up-sampled by a predetermined up-sampling factor, in particular, the same factor as the first down-sampling factor (which is the product of the second and third down-sampling factors), and synthesized to obtain an enhanced microphone signal. The enhanced microphone signal can be transmitted to a remote communication party. It is to be understood, however, that the sub-band error signals ($e_\mu(n)$) may be subject to further processing before being up-sampled or synthesized.

The at least one microphone signal (y(n)) is detected by a microphone being part of the loudspeaker-room-microphone (LRM) system. A loudspeaker signal (also referred to as a reference audio signal) (x(n)) is detected in accordance with the actual impulse response of the LRM system and, thus, gives raise to an echo contribution (d(n)) that is present in the at least one microphone signal (y(n)). The at least one microphone signal (y(n)) also includes a wanted signal, e.g., a speech signal of a local speaker, that is to be enhanced by echo compensation. It might be preferred not to divide the entire microphone signal in sub-band signals that are processed for echo compensation but only some part, e.g., including a pre-determined frequency range only, of the microphone signal. The impulse response of the loudspeaker-room-microphone system is estimated/modeled by adaptive filter coefficients of an employed echo compensation filtering means.

According to the inventive method the first loudspeaker sub-band signals are stored (e.g., in a ring buffer) for the subsequent process of estimating for each sub-band (of a predetermined number of sub-bands in which both the at least one microphone signal (y(n)) and the loudspeaker signal (x(n)) are divided) an echo signal contribution ($\hat{d}_\mu(n)$) in the microphone sub-band signal ($y_\mu(n)$). This estimation is performed on the basis of the first loudspeaker sub-band signals, i.e. the estimation is generated using the stored loudspeaker sub-band signals (sampled by the second down-sampling factor) but it is computed only at the first sampling rate (the one of the microphone sub-band signals). Estimating the echo signal contribution and subtracting for each sub-band the estimated echo signal contribution from the respective microphone sub-band signal is performed at the first factor sampling rate. According to this, the advantages of both down-sampling factors (low aliasing terms for the lower down-sampling factor [reference signal] and low computational complexity for the higher down-sampling factor [microphone signal]) can be exploited.

Since the process of estimating the echo signal contributions ($\hat{d}_\mu(n)$) is required only at the first sampling rate the computational complexity can be reduced by a large amount (compared to a setup that would operate entirely at the second sampling rate). If the process of estimating the echo signal contributions was performed entirely at the first sampling rate, only a very low cancellation quality due to large aliasing terms in the loudspeakers sub-band signals, would be achieved.

The above described estimation process, that uses different sampling factors for the loudspeaker sub-band signals (second down-sampling factor) and for the other signals, i.e., the microphone sub-band signals ($y_\mu(n)$), estimated echo sub-band signals ($\hat{d}_\mu(n)$) and error sub-band signals ($e_\mu(n)$), is able to achieve good aliasing properties for the sub-band loudspeaker signals at a low computational complexity.

However, besides the stored first loudspeaker sub-band signals that are only down-sampled by the second down-sampling factor that is less than the first one, the echo compensation process makes use of the estimated echo signal contributions that are further down-sampled to the sampling rate of the microphone sub-band signals ($y_\mu(n)$). These estimated echo signal contributions (or second filtered loudspeaker sub-band signals) are used for generally more expensive operations included in the echo compensation process. Thus, compared to the art computer resources are more effectively used and estimation of the echo contribution is performed faster with a lower memory demand.

Whereas, the second sampling rate is chosen to guarantee that (almost) no aliasing occurs, the sub-sequent down-sampling by the third down-sampling factor may result in second loudspeaker sub-band signals exhibiting some aliasing components. These second loudspeaker sub-band signals are used for such operations in the process of estimating the impulse response of the LRM and, thereby, the echo contribution signals in the microphone sub-band signals, that are not that much sensible to aliasing.

According to one embodiment, the step of estimating the echo signal contributions ($\hat{d}_\mu(n)$) for the respective sub-bands comprises the steps of adapting the filter coefficients of an echo compensation filtering means on the basis of the stored first loudspeaker sub-band signals but down-sampled by the first down-sampling factor. In other word, only some of the stored first loudspeaker sub-band signals are used for the adaptation process that is performed at the first down-sampling factor.

Thus, the adaptation of the filter coefficients of an echo compensation filtering means which is the most expensive operation in the entire signal processing for echo compensation can be performed for the highest reasonable down-sampling factor (e.g., of 128 for a number of 256 sub-bands) thereby saving memory and significantly reducing the processor load as compared to the art. The third down-sampling factor may be chosen, e.g., from 2 to 4, e.g., as 2 or 3.

The filter coefficients of the echo compensation filtering means can efficiently be adapted for each sub-band, e.g., by the Normalized Least Mean Square algorithm, according to

$$\hat{h}(n+1) = \hat{h}(n) + c(n)\frac{x(n)e(n)}{\|x(n)\|^2} \text{ for the signal vector } x(n) = [x(n), x(n-1), .., x(n-N+1)]^T,$$

where N is the length of the filter $\hat{h}(n)$, $\|\|$ denotes a norm, and the error signal $e(n) = y(n) - \hat{d}(n) = y(n) - \hat{h}^T(n) \, x(n)$. The quantity c(n) describes the step-size of the adaptation process.

According to an embodiment of the herein disclosed method for echo compensation the at least a part of the at least one microphone signal (y(n)) is converted to microphone sub-band signals and/or the loudspeaker signal (x(n)) is divided into loud-speaker sub-band signals by means of an analysis filter bank with, e.g., a first down - sampling factor that is equal to half of the number of sub-bands comprising square-root Hann window filters and wherein the sub-band signals ($e_\mu(n)$) are up-sampled by a predetermined up-sampling factor, preferably, by the first down-sampling factor mentioned above, and synthesized by a synthesis filter bank comprising square-root Hann window filters to obtain the enhanced microphone signal ($\hat{s}(n)$).

Employment of square-root Hann windows is particularly efficient and robust in terms of stability and the square-root of the Hann window functions are readily implemented. The length of the filters of the analysis and the synthesis filter banks may be chosen identical and equal to the number of sub-bands in which the at least one microphone signal and the reference audio signal are divided. Filter banks of M parallel filters may comprise one prototype low-pass filter $h_0(n)$ and modulated band-pass filters $h_l(n) = h_0(n) \, w_M^{ln}$ with $w_M = e^{-j2\pi/M}$. In this case, only one filter has to be designed. It is also noted that a very efficient implementation based on Discrete Fourier Transforms in the form of a polyphase technique providing a fairly flat frequency response is available in this modulation approach.

Experiments have shown that good results for the echo compensation can be achieved when the pure Hann window filters (no square-root) of the analysis filter bank are raised to the power of a predetermined first rational number, in particular, 0.75, and pure Hann window filters of the synthesis filter bank are raised to the power of a predetermined second rational number, in particular, 0.25, such that the sum of the first rational number and the second rational number is 1. Since the analysis filter bank affects the quality of the eventually achieved enhanced microphone signal more than the synthesis filter bank, the first rational number is preferably chosen larger than the second one.

As mentioned above the error sub-band signals may be further processed before being up-sampled and synthesized. For example, the error sub-band signals ($e_\mu(n)$) may by filtered by a noise reduction filtering means and/or a residual echo suppression filtering means to further enhance the quality of the processed signal. By the noise reduction filtering means background noise that might be present in the microphone signal (y(n)) and, thus, in the microphone sub-band signals and error sub-band signals is suppressed. Some residual echo that might be still present in the error sub-band signals is suppressed by the residual echo suppression filtering means as it is known in the art.

The inventive method according to one of the above examples can also be applied to the case of more than one microphone signal. For example, a microphone array may be present in the LRM system providing a number of microphone signals (channels) that are beamformed for enhancing the signal-to-noise ratio. For example, a delay-and-sum beamformer may be used (or any other beamforming means known in the art).

Thus, in one variant of the above-described examples a number of microphone signals ($y_k(n)$) each comprising an echo signal contribution due to the loudspeaker signal (x(n)) is converted to microphone sub-band signals ($y_{\mu,k}(n)$) down-sampled by the first down-sampling factor;
echo signal contributions ($\hat{d}_{\mu,k}(n)$) are estimated for the microphone sub-band signals ($y_{\mu,k}(n)$) of each of the number of microphone signals ($y_k(n)$);
for each sub-band the respective estimated echo signal contribution ($\hat{d}_{\mu,k}(n)$) is subtracted from the respective microphone sub-band signal ($y_{\mu,k}(n)$) of each of the number of microphone signals ($y_k(n)$) (for each microphone channel) to obtain error sub-band signals ($e_{\mu,k}(n)$) for each of the number of microphone signals ($y_k(n)$); and it is performed beamforming of the error sub-band signals ($e_{\mu,k}(n)$) for each of the number of microphone signals ($y_k(n)$) to obtain beamformed error sub-band signals.

The echo signal contributions ($\tilde{d}_{\mu,k}(n)$) are estimated by folding the first loudspeaker sub-band signals with an estimate for the impulse response of the loudspeaker-room-microphone system in the predetermined number of sub-bands for each of the number of microphone signals ($y_k(n)$) and down-sampling the folded first loudspeaker sub-band signals by the third down-sampling factor.

The present invention also provides a computer program product, comprising one or more computer readable media having computer-executable instructions for performing the steps of one of the above examples for the herein disclosed method for echo compensation.

The above-mentioned problem is also solved by a signal processing means for echo compensation of at least one microphone signal ($y(n)$) comprising an echo signal contribution ($d(n)$) due to a loudspeaker signal ($x(n)$) in a loudspeaker-room-microphone system, comprising a first analysis filter bank (12, 12') configured to divide at least a part of the at least one microphone signal ($y(n)$) into a predetermined number of sub-bands to obtain microphone sub-band signals and to down-sample said microphone sub-band signals at a first down-sampling factor ($r$) to obtain down-sampled microphone sub-band signals ($y_\mu(n)$); a second analysis filter bank (15, 15') configured to divide the loudspeaker signal ($x(n)$) into the predetermined number of sub-bands to obtain loudspeaker sub-band signals and to down-sample said loudspeaker sub-band signals at a second down-sampling factor ($r_1$) being less than the first down-sampling factor ($r$) to obtain first loudspeaker sub-band signals; a memory configured to store the first loudspeaker sub-band signals; and an echo compensation filtering means (17; 17') configured to a) fold each of the first loudspeaker sub-band signals with an estimate of the impulse response of the loudspeaker-room-microphone system in the corresponding sub-band to obtain folded loudspeaker sub-band signals b) down-sample each of the folded loudspeaker sub-band signals by a third down-sampling factor ($r_2$) to obtain estimated echo contribution sub-band signals ($\hat{d}_\mu(n)$), the third down-sampling factor ($r_2$) being set to a value so that the first down-sampling factor ($r$) is the product of the second ($r_1$) and third ($r_2$) down-sampling factors; c) down-sample each of the stored first loudspeaker sub-band signals by said third down-sampling factor ($r_2$) to obtain second loudspeaker sub-band signals; and d) subtract each of the estimated echo contribution sub-band signals ($\hat{d}_\mu(n)$) from its corresponding down-sampled microphone sub-band signal ($y_\mu(n)$) to obtain error sub-band signals ($e_\mu(n)$); and wherein the echo compensation filtering means is also configured to update the estimate of the impulse response of the loudspeaker-room-microphone system in each sub-band based on the corresponding second loudspeaker sub-band signal at a rate that is equal to the sampling rate of said second loudspeaker sub-band signals.

The echo compensation by the echo compensation filtering means is performed based on the stored first loudspeaker signals that are sampled at the second sampling rate but is computed only at the first rate, i.e. the one of the microphone sub-band signals. It is the filling of the memory that is to be performed at the higher rate ($r_1$); the more expansive processing is performed at the lower rate.

The signal processing means may further comprise a synthesis filter bank configured to up-sample and synthesize the echo compensated microphone sub-band signals ($e_\mu(n)$) to obtain an enhance microphone signal($\hat{s}(n)$). The up-sampling can be performed by the synthesis filter bank comprising an up-sampling means for up-sampling at the same rate (by the same factor) as the first sampling rate.

According to one example, the signal processing means further comprises a residual echo suppression filtering means and/or a noise reduction filtering means configured to filter the echo compensated microphone sub-band signals ($e_\mu(n)$) in order to suppress some background noise and/or a residual echo contribution that is not removed by the echo compensation filtering means.

The first and the second analysis filter bank and the synthesis filter bank each may each comprise parallel square-root Hann window filters. For the window filters of the first and the second analysis filter banks Hann windows that are raised to the power of a predetermined first rational number, in particular, 0.75, and Hann window filters of the synthesis filter bank raised to the power of a predetermined second rational number, in particular, 0.25, such that the sum of the first rational number and the second rational number is 1, might be utilized preferably. The second rational number may be chosen lower than the first one.

The signal processing means of one of the above examples may comprise a number of first analysis filter banks each configured to convert one of a number of microphone signals ($y_k(n)$) or at least a part of the number of microphone signals ($y_k(n)$) to microphone sub-band signals ($y_{\mu,k}(n)$) down-sampled by a first down-sampling factor (i.e. for each microphone channel a predetermined number of microphone sub-band signals ($y_{\mu,k}(n)$) is generated); and the echo compensation filtering means may be configured to echo compensate each of the microphone sub-band signals ($y_{\mu,k}(n)$) of each of the number of microphone signals ($y_k(n)$) to obtain error sub-band signals ($e_{\mu,k}(n)$) for each of the number of microphone signals ($y_k(n)$); in which case the signal processing means further comprises a beamforming means configured to beamform the error sub-band signals ($e_{\mu,k}(n)$) for each of the number of microphone signals ($y_k(n)$) to obtain beamformed error sub-band signals.

The beamforming means may be a delay-and-sum beamformer or a Generalized Sidelobe Canceller. The Generalized Sidelobe Canceller consists of two signal processing paths: a first (or lower) adaptive path with a blocking matrix and an adaptive noise cancelling means and a second (or upper) non-adaptive path with a fixed beamformer, see, e.g., "An alternative approach to linearly constrained adaptive beamforming", by Griffiths, L.J. and Jim, C.W., IEEE Transactions on Antennas and Propagation, vol. 30., p.27, 1982.

The above example of the inventive signal processing means can advantageously be incorporated in systems for electronically mediated communication and automatized speech recognition. Thus, it is provided a hands-free telephony system and also a speech recognition means each comprising the signal processing means according to one of the above examples. Furthermore, it is provided a speech dialog system or a voice control system comprising such a speech recognition means.

Moreover, the present invention provides a vehicle communication system, comprising at least one microphone, in particular, a microphone array that may comprise one or more directional microphones, at least one loudspeaker and a signal processing means as mentioned above or comprising a hands-free telephony system as mentioned above.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 shows a flow diagram illustrating essential steps of an example of the inventive method for echo compensating a microphone signal comprising a two-stage down-sampling of a reference audio signal.

Figure 2 illustrates an example of a signal processing means according to the present invention in which a reference audio signal is down-sampled and filtered by an echo compensation filtering means.

Figure 3 illustrates a further example of a signal processing means according to the present invention comprising a microphone array and a beamforming means.

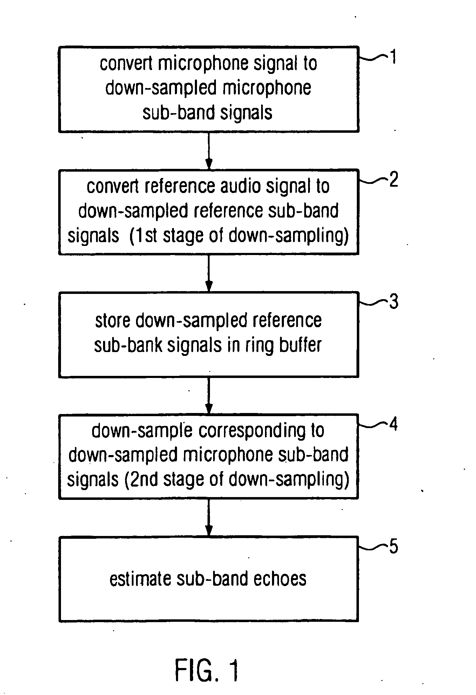

Basic steps of the herein disclosed method for an echo compensation of a microphone signal are shown in Figure 1. In step 1 the microphone signal is divided into sub-band signals and down-sampled by some down-sampling factor $r = r_1 \cdot r_2$. A reference audio signal is down-sampled 2 by a down-sampling factor $r_1$ in a first stage of a two-stage down-sampling process of the reference audio signal. The reference audio signal represents an audio signal received from a remote communication party and that is input to a loudspeaker at the near end. The corresponding signal output by the loudspeaker is modified due to the impulse response of the loudspeaker-room-microphone (LRM) system at the near end and detected by the microphone of the LRM.

The thus down-sampled sub-band signals of the reference audio signal are stored 3 in a ring buffer. The first down-sampling is performed with a down-sampling factor $r_1$ that guarantees that aliasing is sufficiently suppressed. Next, a second down-sampling by a down-sampling factor $r_2$ is performed 4 to arrive at a down-sampling factor $r = r_1 \cdot r_2$ corresponding to the one of the down-sampled microphone sub-band signals. Adaptation of filter coefficients of an echo compensation filtering means and, thereby, the estimation of echoes that are present in the microphone sub-signals is performed 5 at this relatively high sampling rate.

At this sampling rate the estimated echoes are subtracted from the microphone sub-signals in order to obtain enhanced microphone sub-signals. These enhanced microphone sub-signals are then synthesized to obtain an enhanced audio signal that can be transmitted to the remote communication party.

In the above-described example of the inventive method the expensive processing steps of adaptation of the filter coefficients of the employed echo compensation filtering means the folding of the filter coefficients with the accordingly down-sampled reference sub-band signals can be performed for signals down-sampled by a down-sampling factor $r = r_1 \cdot r_2$ that is higher than down-sampling factors used in the art for the process of generating the sub-band signals of the reference signal. In fact, down-sampling factors of, e.g., $r = r_1 \cdot r_2 = 128$ in combination with a total number of sub-bands of $M = 256$ can be used for a still satisfying echo compensation.

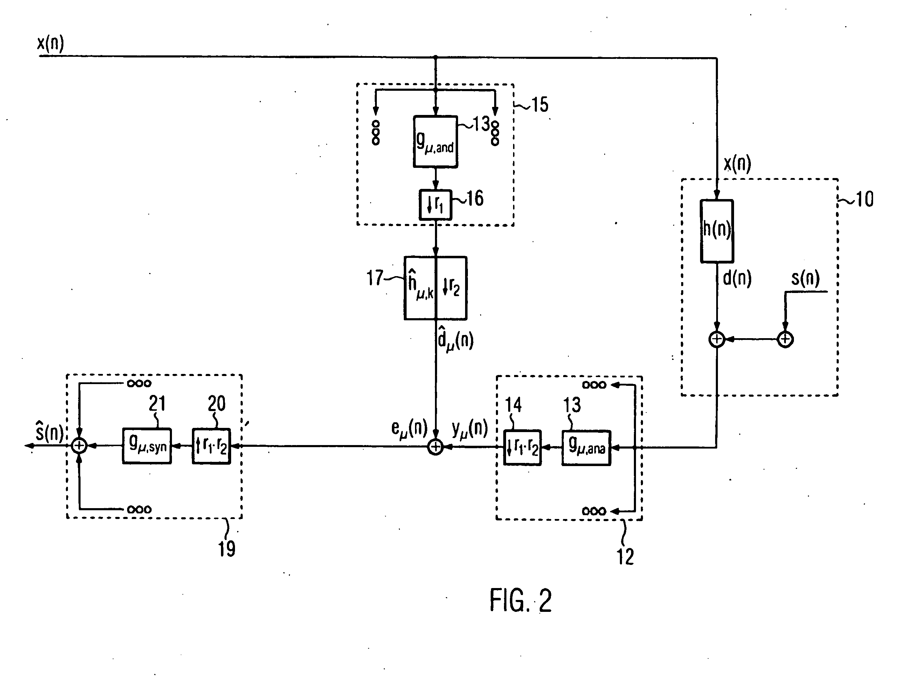

Figure 2 shows an example of the herein disclosed signal processing means used to enhance the quality of a microphone signal $y(n)$ (where n denotes the discrete time index). The microphone signal $y(n)$ is obtained by a microphone being part of an LRM system 10. The microphone detects a speech signal $s(n)$ of a local speaker and an echo contribution $d(n)$ which is due to a loudspeaker or reference audio signal $x(n)$ that is detected by the microphone after modification according to the actual LRM impulse response $h(n)$.

The microphone signal $y(n)$ is input in an analysis filter bank 12 that divides the total-band signal into sub-bands, $\mu = 0,.., M-1$, by a filtering means with filter coefficients $g_{\mu, ana} = [g_{\mu,0,ana}, g_{\mu,1,ana},\cdots, g_{\mu,N_{ana}-1,ana}]^T$, where the upper index T indicates the transposition operation and $N_{ana}$ the filter length. The sub-band signals are down-sampled by a down-sampling means with a down-sampling factor of $r = r_1 \cdot r_2$ with integers $r_1$ and $r_2$. The resulting down-sampled microphone sub-band signals $y_\mu(n)$ are further processed for echo compensation.

For the echo compensation of the down-sampled microphone sub-band signals $y_\mu(n)$ the reference audio signal x(n) is also input in an analysis filter bank 15. According to the present example the reference audio signal x(n) is filtered by the same filtering means 13 with filter coefficients $g_{\mu,ana}$ as used for the microphone signal y(n) to obtain sub-band signals and it is down-sampled by a down-sampling means 16 with a down-sampling factor of $r_1$, e.g., $r_1 = 64$ for a number of M = 256 sub-bands (the sampling rate of the microphone signal may be, e.g., 11025 Hz).

In principle, the adaptation of the filter coefficients of an echo compensation filtering means 17 used for the echo compensation could be performed after this first down-sampling by a down-sampling factor of $r_1$. According to this example of the present invention, however, the sub-band signals that are down-sampled by $r_1$ are stored in a ring buffer (not shown) and subsequently the adaptation of the filter coefficients and the actual echo compensation is performed after a second down-sampling by a down-sampling factor of $r_2$, e.g., $r_2 = 2$ for the choice of $r_1 = 64$ for a number of M = 256 sub-bands. In particular, the most expensive operations for the overall echo compensation, as the adaptation of the filter coefficients, are performed for signals down-sampled by $r = r_1 \cdot r_2$ which results in a very effective reduction of processor load and fastening of the overall signal processing.

In the frequency ($\Omega$) domain, the analysis filter bank 15 outputs the sub-band signals (short-time spectra)

$$X_{\mu}(e^{j\Omega}) = \sum_{m=0}^{r_1-1} X\left(e^{j\left(\frac{\Omega}{r_1} - \frac{2\pi}{r_1} m\right)}\right) G_{\mu,ana}\left(e^{j\left(\frac{\Omega}{r_1} - \frac{2\pi}{r_1} m\right)}\right).$$

Theses short-time spectra are folded in an echo compensation filtering means 17 to obtain echo compensated spectra

$$\hat{D}_{\mu}(e^{j\Omega}) = X_{\mu}(e^{j\Omega}) \, \hat{H}_{\mu}(e^{j\Omega}) = \left[ \sum_{m=0}^{r_1-1} X\left(e^{j\left(\frac{\Omega}{r_1} - \frac{2\pi}{r_1} m\right)}\right) G_{\mu,ana}\left(e^{j\left(\frac{\Omega}{r_1} - \frac{2\pi}{r_1} m\right)}\right)\right] \hat{H}_{\mu}(e^{j\Omega})$$

with the filter coefficients $\hat{H}_{\mu}(e^{j\Omega})$ (in the frequency domain) of the echo compensation filtering means 17. The coefficients $\hat{H}_{\mu}(e^{j\Omega})$ represent the temporally adapted estimates for the corresponding impulse response of the LRM $H_{\mu}(e^{j\Omega})$ (according to the coefficients of h(n) in the time domain).

For $\mu = 0$ aliasing terms of the analysis filter bank can be eliminated for the choice

$$G_{0,ana}\left(e^{j\left(\frac{\Omega}{r_1} - \frac{2\pi}{r_1} m\right)}\right) = \begin{cases} 1, & \text{for } m = 0 \\ 0, & \text{for } m \in \{1, .., r_1 - 1\} \end{cases}$$

or

$$G_{0,ana}(e^{j\Omega}) = \begin{cases} 1, & \text{if } |\Omega| \leq \dfrac{2\pi}{M} \\[2em] \text{arbitrary}, & \text{if } \dfrac{2\pi}{M} < |\Omega| < \dfrac{2\pi}{r_1} \\[2em] 0, & \text{if } |\Omega| \geq \dfrac{2\pi}{r_1} \end{cases}$$

Here, all sub-bands M have the same sub-band width. The other filter $G_{\mu,ana}(e^{j\Omega})$ with $\mu = 1,..,$ M-1, can be deduced from the above filter for the sub-band $\mu = 0$ by a simple frequency shift operation. Thus, only one filter has to be designed.

The thus obtained sub-band estimates $\hat{d}_\mu(n)$ for the echo contribution d(n) that is detected by the microphone of the LRM and is accordingly present in the microphone signal y(n) are subtracted from the down-sampled microphone sub-band signals $y_\mu(n)$ to obtain sub-band error signals $e_\mu(n)$. It has to be stressed that the estimates for the sub-band estimates $\hat{d}_\mu(n)$ are generated using the stored loudspeaker signals (sampled at the second sampling rate) but they are computed only at the first rate (the one of the microphone sub-band signals). It might be preferred to filter the sub-band error signals $e_\mu(n)$ for the reduction of background noise that usually is also present in the microphone signal y(n) and residual echo reduction.

As shown in Figure 2 the sub-band error signals $e_\mu(n)$ are input in a synthesis filter bank 19 comprising an up-sampling means 20 with an up-sampling factor of $r = r_1 \cdot r_2$ and a filtering means 21 comprising high-pass, band-pass and low-pass filters to eliminate imaging terms as known in the art. The resulting synthesized speech signal $\hat{s}(n)$ is characterized by a significantly reduced acoustic echo.

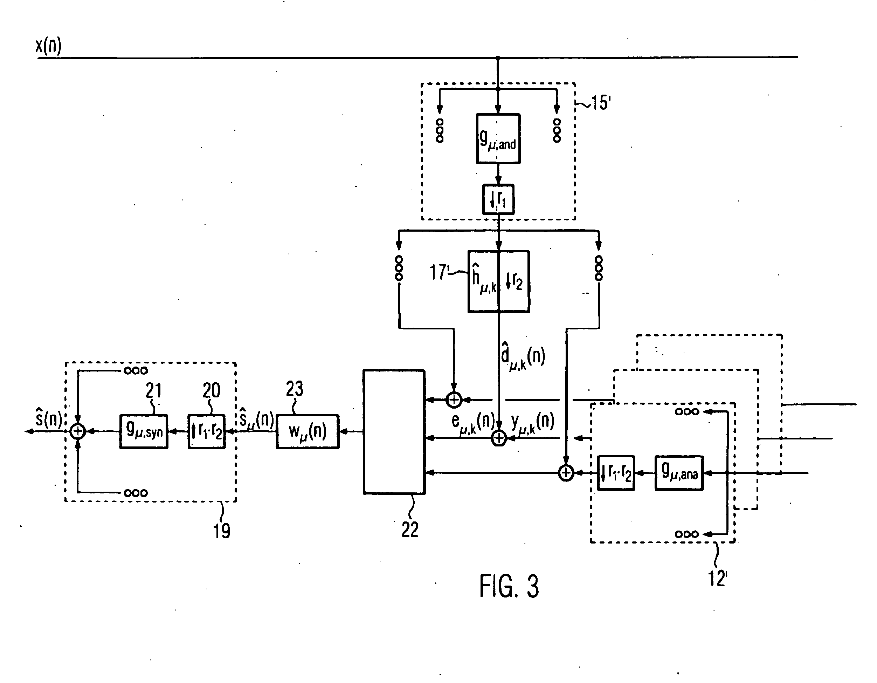

Figure 3 illustrates an incorporation of the inventive echo compensation in a communication system including a microphone array comprising directional microphones and a beamforming means 22. Multiple microphone signals $y_k(n)$ are obtained from the microphone array. Each of the microphone channels k of the microphone array is connected with a respective analysis filter bank 12' operating as the ones described above with reference to Figure 2.

Accordingly, an echo compensation filtering means 17' comprises filters $\hat{h}_{\mu,k}(n)$ for each of the microphone channels and the down-sampled estimates $\hat{d}_{\mu,k}(n)$ for the echo contribution of each channel are subtracted from the microphone sub-band signals $y_{\mu,k}(n)$. Thereby, error signals $e_{\mu,k}(n)$ are obtained that are input in the beamforming means 22. The estimates $\hat{d}_{\mu,k}(n)$ are obtained by folding the filters $\hat{h}_{\mu,k}(n)$ with the sub-band signals obtained from the reference audio signal x(n) by the analysis filter bank 15'. The filter coefficients of the echo compensation filtering means 17' and the folding of these coefficients with the sub-band reference signals is again performed at a sampling rate that is similar to the sampling rate of the analysis filter bank 12' that receives the microphone signals $y_k(n)$ (see also description above).

The multi-channel system of the present example may make use of adaptive or non-adaptive beamformers, see, e.g., "Optimum Array Processing, Part IV of Detection, Estimation, and Modulation Theory" by H. L. van Trees, Wiley & Sons, New York 2002. The beamforming means 22 combines the error signals $e_{\mu,k}(n)$ for the microphone channels to obtain beamformed sub-band signals which are input in a filtering means 23 that suppresses a residual echo and enhances the quality of the beamformed sub-band signals by noise reduction as known in the art.

The filtering means 23 may, e.g., comprise a Wiener filter performing reduction of background noise according to a filter characteristic in the frequency regime given by $W(e^{j\Omega}, n) = 1 - \hat{S}_{nn}(e^{j\Omega}, n) / \hat{S}_{ee}(e^{j\Omega}, n)$, where $\hat{S}_{nn}(e^{j\Omega}, n)$ and $\hat{S}_{ee}(e^{j\Omega}, n)$ denote the estimated short-time power density of the background noise and the short-time power density of the (full-band) error signal, respectively.

The enhanced sub-band signals $\hat{s}_\mu(n)$ are input in a synthesis filter bank similar to the one described with reference to Figure 2. After up-sampling by an up-sampling factor of $r = r_1 \cdot r_2$ performed by an up-sampling means 20 and filtering by a filtering means 21 comprising high-pass, band-pass and low-pass filters to eliminate imaging terms eventually the synthesized speech signal $\hat{s}(n)$ is obtained.

It is to be understood that some or all of the above described features can also be combined in different ways.

**Claims**

1.  Method for echo compensation of at least one microphone signal (y(n)) comprising an echo signal contribution (d (n)) due to a loudspeaker signal (x(n)) in a loudspeaker-room-microphone system, comprising the steps of:

    dividing at least a part of the at least one microphone signal (y(n)) into a predetermined number of sub-bands to obtain microphone sub-band signals and down-sampling each of said microphone sub-band signals by a first down-sampling factor (r) to obtain down-sampled microphone sub-band signals ($y_\mu(n)$);

    dividing the loudspeaker signal (x(n)) into said predetermined number of sub-bands to obtain loudspeaker sub-band signals and down-sampling each of said loudspeaker sub-band signals by a second down-sampling factor ($r_1$) being less than the first down-sampling factor (r) to obtain first loudspeaker sub-band signals;

    storing the first loudspeaker sub-band signals;

    folding each of the first loudspeaker sub-band signals with an estimate of the impulse response of the loudspeaker-room-microphone system in the corresponding sub-band to obtain folded loudspeaker sub-band signals;

    down-sampling each of the folded loudspeaker sub-band signals by a third down-sampling factor ($r_2$) to obtain estimated echo contribution sub-band signals ($\hat{d}_\mu(n)$), the third down-sampling factor ($r_2$) being set to a value so that the first down-sampling factor (r) is the product of the second ($r_1$) and third ($r_2$) down-sampling factors;

    subtracting each of the estimated echo contribution sub-band signals ($\hat{d}_\mu(n)$) from its corresponding down-sampled microphone sub-band signal ($y_\mu(n)$) to obtain error sub-band signals ($e_\mu(n)$);

    down-sampling each of the stored first loudspeaker sub-band signals by said third down-sampling factor ($r_2$) to obtain second loudspeaker sub-band signals; and

    updating the estimate of the impulse response of the loudspeaker-room-microphone system in each sub-band based on the corresponding second loudspeaker sub-band signal at a rate that is equal to the sampling rate of said second loudspeaker sub-band signals.

2.  The method according to claim 1, wherein the step of updating comprises adapting the filter coefficients of an echo compensation filtering means by the Normalized Least Mean Square algorithm.

3.  The method according to claim 1 or 2, wherein the third down-sampling factor ($r_2$) is chosen from the interval of 2 to 4.

4.  The method according to one of the preceding claims, wherein the at least a part of the at least one microphone signal (y(n)) is divided into microphone sub-band signals and/or the loudspeaker signal (x(n)) is divided into loudspeaker sub-band signals by means of an analysis filter bank comprising square-root Hann window filters and wherein the sub-band error signals ($e_\mu(n)$) are up-sampled at a predetermined up-sampling rate and synthesized by a synthesis filter bank comprising square-root Hann window filters to obtain an enhanced microphone signal ($\hat{s}(n)$).

5.  The method according to one of the claims 1 to 3, wherein the at least a part of the at least one microphone signal (y(n)) is divided into microphone sub-band signals and/or the loudspeaker signal (x(n)) is divided into loudspeaker sub-band signals by means of an analysis filter bank comprising Hann window filters and wherein the sub-band error signals ($e_\mu(n)$) are up-sampled at a predetermined up-sampling rate and synthesized by a synthesis filter bank comprising Hann window filters to obtain an enhanced microphone signal ($\hat{s}(n)$). wherein the Hann window filters of the analysis filter bank are raised to the power of a predetermined first rational number and the Hann window filters of the synthesis filter bank are raised to the power of a predetermined second rational number such that the sum of the first rational number and the second rational number is 1.

6.  The method according to one of the preceding claims, further comprising filtering the error sub-band signals ($e_\mu(n)$) by a noise reduction filtering means and/or a residual echo suppression filtering means.

7.  A method for echo compensation of a number M of microphone signals, each comprising an echo signal contribution due to a loudspeaker signal, the method comprising applying the method according to one of the claims 1 to 3 to each of the M microphone signals, thereby yielding a number M of error sub-band signals ($e_{\mu,k}(n)$) in each sub-band; and beamforming the error sub-band signals ($e_{\mu,k}(n)$) of each sub-band, thereby yielding a number of beamformed error sub-band signals.

8.  Computer program product, comprising one or more computer readable media having computer-executable instructions for performing the steps of the method according to one of the claims 1 - 7.

9. Signal processing means for echo compensation of at least one microphone signal (y(n)) comprising an echo signal contribution (d(n)) due to a loudspeaker signal (x(n)) in a loudspeaker-room-microphone system, comprising

a first analysis filter bank (12, 12') configured to divide at least a part of the at least one microphone signal (y(n)) into a predetermined number of sub-bands to obtain microphone sub-band signals and to down-sample said microphone sub-band signals at a first down-sampling factor (r) to obtain down-sampled microphone sub-band signals ($y_\mu(n)$);

a second analysis filter bank (15, 15') configured to divide the loudspeaker signal (x(n)) into the predetermined number of sub-bands to obtain loudspeaker sub-band signals and to down-sample said loudspeaker sub-band signals at a second down-sampling factor ($r_1$) being less than the first down-sampling factor (r) to obtain first loudspeaker sub-band signals;

a memory configured to store the first loudspeaker sub-band signals; and

an echo compensation filtering means (17; 17') configured to

a) fold each of the first loudspeaker sub-band signals with an estimate of the impulse response of the loudspeaker-room-microphone system in the corresponding sub-band to obtain folded loudspeaker sub-band signals;

b) down-sample each of the folded loudspeaker sub-band signals by a third down-sampling factor ($r_2$) to obtain estimated echo contribution sub-band signals ($\hat{d}_\mu(n)$), the third down-sampling factor ($r_2$) being set to a value so that the first down-sampling factor (r) is the product of the second ($r_1$) and third ($r_2$) down-sampling factors;

c) down-sample each of the stored first loudspeaker sub-band signals by said third down-sampling factor ($r_2$) to obtain second loudspeaker sub-band signals; and

d) subtract each of the estimated echo contribution sub-band signals ($\hat{d}_\mu(n)$) from its corresponding down-sampled microphone sub-band signal ($y_\mu(n)$) to obtain error sub-band signals ($e_\mu(n)$);

and wherein the echo compensation filtering means is also configured to update the estimate of the impulse response of the loudspeaker-room-microphone system in each sub-band based on the corresponding second loudspeaker sub-band signal at a rate that is equal to the sampling rate of said second loudspeaker sub-band signals.

10. The signal processing means according to claim 9, further comprising a synthesis filter bank (19) configured to up-sample and synthesize the error sub-band signals ($e_\mu(n)$) to obtain an enhanced microphone signal($\hat{s}(n)$).

11. The signal processing means according to claim 9, further comprising a residual echo suppression filtering means (23) and/or a noise reduction filtering means (23) configured to filter the error sub-band signals ($e_\mu(n)$).

12. The signal processing means according one of the claims 10 or 11, wherein the first and the second analysis filter bank (12, 12', 15, 15') and the synthesis filter bank (19) each comprises multiple square-root Hann window filters.

13. The signal processing means according one of the claims 10 or 11, wherein the first and the second analysis filter bank (12, 12', 15, 15') and the synthesis filter bank (19) each comprises multiple Hann window filters, wherein the Hann window filters of the first and the second analysis filter banks (12, 12', 15, 15') are raised to the power of a predetermined first rational number and the Hann window filters of the synthesis filter bank (19) are raised to the power of a predetermined second rational number such that the sum of the first rational number and the second rational number is 1.

14. The signal processing means according to one of the claims 9 to 13, wherein the memory is a ring buffer.

15. A system for echo compensation of a number of M microphone signals, each comprising an echo signal contribution due to a loudspeaker signal, the system comprising

a signal processing means as claimed in claim 9 or 14 for each of the M microphone signals, thereby yielding a number M of error sub-band signals ($e_{\mu,k}(n)$) in each sub-band; and

beamforming means (22) adapted to beamform the error sub-band signals ($e_{\mu,k}(n)$) of each sub-band, thereby yielding a number of beamformed error sub-band signals.

16. The system of claim 15, wherein the beamforming means (22) is a delay-and-sum beamformer or a Generalized Sidelobe Canceler.

17. Hands-free telephony system, comprising the signal processing means according to one of the claims 9 - 14 or the system according to one of the claims 15 - 16.

**18.** Speech recognition means comprising the signal processing means according to one of the claims 9 or 14 or the system according to one of the claims 15 - 16.

**19.** Speech dialog system or voice control system comprising the speech recognition means according to claim 18.

**20.** Vehicle communication system, comprising at least one microphone, at least one loudspeaker and a signal processing means according to one of the claims 9 to 14 or comprising a hands-free telephony system according to claim 17.

**Patentansprüche**

**1.** Verfahren zur Echokompensation von zumindest einem Mikrofonsignal ($y(n)$), das einen Echosignalanteil ($d(n)$) aufgrund eines Lautsprechersignals ($x(n)$) in einem Lautsprecher-Raum-Mikrofon-System aufweist, das die Schritte umfasst:

Teilen von zumindest einem Teil des zumindest einen Mikrofonsignals ($y(n)$) in eine vorbestimmte Anzahl an Teilbänder, um Mikrofonteilbandsignale zu erhalten, und Unterabtasten jedes der genannten Mikrofonteilbandsignale um einen ersten Unterabtastfaktor ($r$), um unterabgetastete Mikrofonteilbandsignale ($y_\mu(n)$) zu erhalten;
Teilen des Lautsprechersignals ($x(n)$) in die genannte vorbestimmte Anzahl an Teilbänder, um Lautsprecherteilbandsignale zu erhalten, und Unterabtasten jedes der Lautsprecherteilbandsignale um einen zweiten Unterabtastfaktor ($r_1$), der kleiner als der erste Unterabtastfaktor ($r$) ist, um erste Lautsprecherteilbandsignale zu erhalten;
Speichern der ersten Lautsprecherteilbandsignale;
Falten jedes der ersten Lautsprecherteilbandsignale mit einer Schätzung der Impulsantwort des Lautsprecher-Raum-Mikrofon-Systems in dem entsprechenden Teilband, um gefaltete Lautsprecherteilbandsignale zu erhalten;
Unterabtasten jedes der gefalteten Lautsprecherteilbandsignale um einen dritten Unterabtastfaktor ($r_2$), um geschätzte Echonanteilsteilbandsignale ($\hat{d}_\mu(n)$) zu erhalten, wobei der dritte Unterabtastfaktor ($r_2$) auf einen solchen Wert gesetzt wird, dass der erste Unterabtastfaktor ($r$) das Produkt aus dem zweiten Unterabtastfaktor ($r_1$) und dem dritten Unterabtastfaktor ($r_2$) ist;
Subtrahieren jedes der geschätzten Echonanteilsteilbandsignale ($\hat{d}_\mu(n)$) von seinem entsprechenden unterabgetasteten Mikrofonteilbandsignal ($y_\mu(n)$), um Fehlerteilbandsignale ($e_\mu(n)$) zu erhalten;
Unterabtasten jedes der gespeicherten ersten Lautsprecherteilbandsignale um den genannten dritten Unterabtastfaktor ($r_2$), um zweite Lautsprecherteilbandsignale zu erhalten, und
Aktualisieren der Schätzung der Impulsantwort des Lautsprecher-Raum-Mikrofon-Systems in jedem Teilband auf der Grundlage des entsprechenden zweiten Lautsprecherteilbandsignals mit einer Rate, die der Abtastrate der genannten zweiten Lautsprecherteilbandsignale gleich ist.

**2.** Das Verfahren gemäß Anspruch 1, in dem der Schritt des Aktualisierens das Einstellen der Filterkoeffizienten einer Echokompensationsfiltereinrichtung durch den Algorithmus des normalisierten kleinsten mittleren Quadrats umfasst.

**3.** Das Verfahren gemäß Anspruch 1 oder 2, in dem der dritte Unterabtastfaktor ($r_2$) aus dem Intervall von 2 bis 4 ausgewählt wird.

**4.** Das Verfahren gemäß einem der vorhergehenden Ansprüche, in dem der zumindest eine Teil des zumindest einen Mikrofonsignals ($y(n)$) in Mikrofonteilbandsignale und/oder das Lautsprechersignal ($x(n)$) in Lautsprecherteilbandsignale mithilfe einer Analysefilterbank geteilt wird, die Square-Root-Hann-Window-Filter umfasst, und in dem die Fehlerteilbandsignale ($e_\mu(n)$) mit einer vorbestimmten Überabtastrate überabgetastet und durch eine Synthesefilterbank synthetisiert werden, die Square-Root-Hann-Window-Filter umfasst, um ein verbessertes Mikrofonsignal ($\hat{s}(n)$) zu erhalten.

**5.** Das Verfahren gemäß einem der Ansprüche 1 bis 3, in dem der zumindest eine Teil des zumindest einen Mikrofonsignals ($y(n)$) in Mikrofonteilbandsignale und/oder das Lautsprechersignal ($x(n)$) in Lautsprecherteilbandsignale mithilfe einer Analysefilterbank geteilt wird, die Square-Root-Hann-Window-Filter umfasst, und in dem die Fehlerteilbandsignale ($e_\mu(n)$) mit einer vorbestimmten Überabtastrate überabgetastet und durch eine Synthesefilterbank synthetisiert werden, wobei die Hann-Window-Filter der Analysefilterbank mit einer vorbestimmten ersten rationalen Zahl potenziert werden und die Hann-Window-Filter der Synthesefilterbank mit einer vorbestimmten zweiten rationalen Zahl potenziert werden, so dass die Summe der ersten rationalen Zahl und der zweiten rationalen Zahl 1 ist.

6. Das Verfahren gemäß einem der vorhergehenden Ansprüche, das weiterhin das Filtern der Fehlerteilbandsignale ($e_{\mu}(n)$) durch eine Geräuschreduktionsfiltereinrichtung und/oder eine Residuelles-Echo-Unterdrückungs-Filtereinrichtung umfasst.

7. Ein Verfahren zur Echokompensation einer Anzahl M an Mikrofonsignalen, von denen jedes einen Echosignalanteil aufgrund eines Lautsprechersignals aufweist, wobei das Verfahren umfasst
Anwenden des Verfahrens gemäß einem der Ansprüche 1 bis 3 auf jedes der M Mikrofonsignale, wodurch eine Anzahl M an Fehlerteilbandsignale ($e_{\mu,k}(n)$) in jedem Teilband erhalten wird; und
Beamformen der Fehlerteilbandsignale ($e_{\mu,k}(n)$) von jedem Teilband, wodurch eine Anzahl an gebeamformten Fehlerteilbandsignale erhalten wird.

8. Computerprogrammprodukt, das ein oder mehrere computerlesbare Medien umfasst, die computerausführbare Anweisungen zum Ausführen der Schritte des Verfahrens gemäß einem der Ansprüche 1 - 7 aufweisen.

9. Signalverarbeitungseinrichtung zur Echokompensation von zumindest einem Mikrofonsignal ($y(n)$), das einen Echosignalanteil ($d(n)$) aufgrund eines Lautsprechersignals ($x(n)$) in einem Lautsprecher-Raum-Mikrofon-System aufweist, die umfasst
eine erste Analysfilterbank (12, 12'), die dazu ausgebildet ist, zumindest einen Teil des zumindest einen Mikrofonsignals ($y(n)$) in eine vorbestimmte Anzahl an Teilbänder zu teilen, um Mikrofonteilbandsignale zu erhalten, und die genannten Mikrofonteilbandsignale um einen ersten Unterabtastfaktor ($r$) unterabzutasten, um unterabgetastete Mikrofonteilbandsignale ($y_{\mu}(n)$) zu erhalten;
eine zweite Analysefilterbank (15, 15'), die dazu ausgebildet ist, das Lautsprechersignal ($x(n)$) in eine vorbestimmte Anzahl an Teilbänder zu teilen, um Lautsprecherteilbandsignale zu erhalten, und die genannten Lautsprecherteilbandsignale um einen zweiten Unterabtastfaktor ($r_1$), der kleiner als der erste Unterabtastfaktor ($r$) ist, unterabzutasten, um erste Lautsprecherteilbandsignale zu erhalten;
einen Speicher, der dazu ausgebildet ist, die ersten Lautsprecherteilbandsignale zu speichern; und
eine Echokompensationsfiltereinrichtung (17, 17'), die dazu ausgebildet ist,

a) jedes der ersten Lautsprecherteilbandsignale mit einer Schätzung der Impulsantwort des Lautsprecher-Raum-Mikrofon-Systems in dem entsprechenden Teilband zu falten, um gefaltete Lautsprecherteilbandsignale zu erhalten;
b) jedes der gefalteten Lautsprecherteilbandsignale um einen dritten Unterabtastfaktor ($r_2$) unterabzutasten, um geschätzte Echonanteilsteilbandsignale ($\hat{d}_{\mu}(n)$) zu erhalten, wobei der dritte Unterabtastfaktor ($r_2$) auf einen solchen Wert gesetzt wird, dass der erste Unterabtastfaktor ($r$) das Produkt aus dem zweiten Unterabtastfaktor ($r_1$) und dem dritten Unterabtastfaktor ($r_2$) ist;
c) jedes der gespeicherten ersten Lautsprecherteilbandsignale um den genannten dritten Unterabtastfaktor ($r_2$) unterabzutasten, um zweite Lautsprecherteilbandsignale zu erhalten; und
d) jedes der geschätzten Echonanteilsteilbandsignale ($\hat{d}_{\mu}(n)$) von seinem entsprechenden unterabgetasteten Mikrofonteilbandsignal ($y_{\mu}(n)$) zu subtrahieren, um Fehlerteilbandsignale ($e_{\mu}(n)$) zu erhalten;

und wobei die Echokompensationsfiltereinrichtung auch dazu ausgebildet ist, die Schätzung der Impulsantwort des Lautsprecher-Raum-Mikrofon-Systems in jedem Teilband auf der Grundlage des entsprechenden zweiten Lautsprecherteilbandsignals mit einer Rate, die der Abtastrate der genannten zweiten Lautsprecherteilbandsignale gleich ist, zu aktualisieren.

10. Die Signalverarbeitungseinrichtung gemäß Anspruch 9, die weiterhin eine Synthesefilterbank (19) umfasst, die dazu ausgebildet ist, die Fehlerteilbandsignale ($e_{\mu}(n)$) überabzutasten und zu synthetisieren, um ein verbessertes Mikrofonsignal ($\hat{s}(n)$) zu erhalten.

11. Die Signalverarbeitungseinrichtung gemäß Anspruch 9, die weiterhin eine Residuelles-Echo-Unterdrückungs-Filtereinrichtung (23) und/oder eine Geräuschreduktionsfiltereinrichtung (23), die dazu ausgebildet ist, die Fehlerteilbandsignale ($e_{\mu}(n)$) zu filtern, umfasst.

12. Die Signalverarbeitungseinrichtung gemäß einem der Ansprüche 10 oder 11, in der die erste und zweite Analysefilterbank (12, 12', 15, 15') und die Synthesefilterbank (19) mehrere Square-Root-Hann-Window-Filter umfassen.

13. Die Signalverarbeitungseinrichtung gemäß einem der Ansprüche 10 oder 11, in der die erste und zweite Analysefilterbank (12, 12', 15, 15') und die Synthesefilterbank (19) mehrere Square-Root-Hann-Window-Filter umfassen, wobei die Hann-Window-Filter der ersten und zweiten Analysefilterbank (12, 12', 15, 15') mit einer vorbestimmten ersten rationalen Zahl potenziert werden und die Hann-Window-Filter der Synthesefilterbank (19) mit einer vorbestimmten zweiten rationalen Zahl potenziert werden, so dass die Summe der ersten rationalen Zahl und der zweiten rationalen Zahl 1 ist.

**14.** Die Signalverarbeitungseinrichtung gemäß einem der Ansprüche 9 bis 13, in der der Speicher ein Ringpuffer ist.

**15.** Ein System zur Echokompensation einer Anzahl M an Mikrofonsignalen, von denen jedes einen Echosignalanteil aufgrund eines Lautsprechersignals aufweist, wobei das System umfasst
eine Signalverarbeitungseinrichtung für jedes der M Mikrofonsignale, wie sie in Anspruch 9 oder 14 beansprucht ist, wodurch eine Anzahl M an Fehlerteilbandsignale ($e_{\mu,k}(n)$) in jedem Teilband erhalten wird, und
eine Beamformereinrichtung (22), die dazu eingerichtet ist, die Fehlerteilbandsignale ($e_{\mu,k}(n)$) von jedem Teilband zu beamformen, wodurch eine Anzahl an gebeamformten Fehlerteilbandsignale erhalten wird.

**16.** Das System von Anspruch 15, in dem die Beamformereinrichtung (22) ein Delay-And-Sum-Beamformer oder ein Generalized-Sidelobe-Canceller ist.

**17.** Freihand-Telefonsystem, das die Signalverarbeitungseinrichtung gemäß einem der Ansprüche 9 bis 14 oder das System gemäß einem der Ansprüche 15 - 16 umfasst.

**18.** Spracherkennungseinrichtung, die die Signalverarbeitungseinrichtung gemäß einem der Ansprüche 9 bis 14 oder das System gemäß einem der Ansprüche 15 - 16 umfasst.

**19.** Sprachdialogsystem oder Sprachsteuerungssystem, das die Spracherkennungseinrichtung gemäß Anspruch 18 umfasst.

**20.** Fahrzeugkommunikationssystem, das zumindest ein Mikrofon, zumindest einen Lautsprecher und eine Signalverarbeitungseinrichtung gemäß einem der Ansprüche 9 bis 14 umfasst, oder das ein Freihand-Telefonsystem gemäß Anspruch 17 umfasst.

## Revendications

**1.** Procédé de compensation d'écho d'au moins un signal de microphone (y(n)) comprenant une contribution de signal d'écho (d(n)) due à un signal de haut-parleur (x(n)) dans un système haut-parleur/pièce/microphone, comprenant les étapes consistant à :

diviser au moins une partie de l'au moins un signal de microphone (y(n)) en un nombre prédéterminé de sous-bandes pour obtenir des signaux de sous-bande de microphone, et sous-échantillonner chacun desdits signaux de sous-bande de microphone selon un premier facteur de sous-échantillonnage (r) pour obtenir des signaux de sous-bande de microphone sous-échantillonnés ($y_{\mu}(n)$) ;
diviser le signal de haut-parleur (x(n)) par ledit nombre prédéterminé de sous-bandes pour obtenir des signaux de sous-bande de haut-parleur et sous-échantillonner chacun desdits signaux de sous-bande de haut-parleur selon un deuxième facteur de sous-échantillonnage ($r_1$) inférieur au premier facteur de sous-échantillonnage (r) pour obtenir des premiers signaux de sous-bande de haut-parleur ;
stocker les premiers signaux de sous-bande de haut-parleur ;
replier chacun des premiers signaux de sous-bande de haut-parleur avec une estimation de la réponse d'impulsion du système haut-parleur/pièce/microphone dans la sous-bande correspondante pour obtenir des signaux de sous-bande de haut-parleur repliés ;
sous-échantillonner chacun des signaux de sous-bande de haut-parleur repliés selon un troisième facteur de sous-échantillonnage ($r_2$) pour obtenir des signaux de sous-bande de contribution d'écho estimés ($\hat{d}_{\mu}(n)$), le troisième facteur de sous-échantillonnage ($r_2$) étant réglé à une valeur telle que le premier facteur de sous-échantillonnage (r) est le produit des deuxième ($r_1$) et troisième ($r_2$) facteurs de sous-échantillonnage ;
soustraire chacun des signaux de sous-bande de contribution d'écho estimés ($\hat{d}_{\mu}(n)$) de son signal de sous-bande de microphone sous-échantillonné ($y_{\mu}(n)$) correspondant pour obtenir des signaux de sous-bande d'erreur ($e_{\mu}(n)$) ;
sous-échantillonner chacun des premiers signaux de sous-bande de haut-parleur stockés selon ledit troisième facteur de sous-échantillonnage ($r_2$) pour obtenir des deuxièmes signaux de sous-bande de haut-parleur ;

et

mettre à jour l'estimation de la réponse d'impulsion du système haut-parleur/pièce/microphone dans chaque sous-bande sur base du deuxième signal de sous-bande de haut-parleur correspondant, à une fréquence égale à la fréquence d'échantillonnage desdits deuxièmes signaux de sous-bande de haut-parleur.

2. Procédé selon la revendication 1, dans lequel l'étape de mise à jour comprend une adaptation par l'algorithme des moindres carrés moyens normalisé des coefficients de filtre d'un moyen de filtrage de compensation d'écho.

3. Procédé selon la revendication 1 ou 2, dans lequel le troisième facteur de sous-échantillonnage ($r_2$) est choisi parmi l'intervalle de 2 à 4.

4. Procédé selon l'une des revendications précédentes, dans lequel l'au moins une partie de l'au moins un signal de microphone (y(n)) est divisée en signaux de sous-bande de microphone et/ou le signal de haut-parleur (x(n)) est divisé en signaux de sous-bande de haut-parleur au moyen d'un banc de filtres d'analyse comprenant des filtres par racine carrée à fenêtre de Hann, et dans lequel les signaux d'erreur de sous-bande ($e_\mu$(n)) sont sur-échantillonnés à une fréquence de sur-échantillonnage prédéterminée et synthétisés par un banc de filtres de synthèse comprenant des filtres par racine carrée à fenêtre de Hann pour obtenir un signal de microphone amélioré ($\hat{s}$(n)).

5. Procédé selon l'une des revendications 1 à 3, dans lequel l'au moins une partie de l'au moins un signal de microphone (y(n)) est divisée en des signaux de sous-bande de microphone et/ou le signal de haut-parleur (x(n)) est divisé en signaux de sous-bande de haut-parleur au moyen d'un banc de filtres d'analyse comprenant des filtres à fenêtre de Hann, et dans lequel les signaux d'erreur de sous-bande ($e_\mu$(n)) sont sur-échantillonnés à une fréquence de sur-échantillonnage prédéterminée et synthétisés par un banc de filtres de synthèse comprenant des filtres à fenêtre de Hann pour obtenir un signal de microphone amélioré ($\hat{s}$(n)), dans lequel les filtres à fenêtre de Hann du banc de filtres d'analyse sont élevés à la puissance d'un premier nombre rationnel prédéterminé et les filtres à fenêtre de Hann du banc de filtres d'analyse sont élevés à la puissance d'un deuxième nombre rationnel prédéterminé, de telle sorte que la somme des premier et deuxième nombres rationnels est égale à 1.

6. Procédé selon l'une des revendications précédentes, comprenant en outre un filtrage des signaux de sous-bande d'erreur ($e_\mu$(n)) par un moyen de filtrage à réduction de bruit et/ou un moyen de filtrage à suppression d'écho résiduel.

7. Procédé pour la compensation d'écho d'un nombre M de signaux de microphone comprenant chacun une contribution de signal d'écho dû à un signal de haut-parleur, le procédé comprenant
l'application du procédé selon l'une des revendications 1 à 3 à chacun des signaux de microphone M, fournissant ainsi un nombre M de signaux de sous-bande d'erreur ($e_{\mu,k}$(n)) dans chaque sous-bande ; et
la formation d'un faisceau à partir des signaux de sous-bande d'erreur ($e_{\mu,k}$(n)) de chaque sous-bande, fournissant ainsi un nombre de signaux de sous-bande d'erreur formés dans un faisceau.

8. Produit logiciel comprenant un ou plusieurs supports lisibles par un ordinateur qui comportent des instructions exécutables pour mettre en oeuvre les étapes d'un procédé selon l'une des revendications 1 à 7.

9. Moyen de traitement de signal pour la compensation d'écho d'au moins un signal de microphone (y(n)) comprenant une contribution de signal d'écho (d(n)) due à un signal de haut-parleur (x(n)) dans un système haut-parleur/pièce/microphone, comprenant
un premier banc de filtres d'analyse (12, 12') configuré pour diviser au moins une partie de l'au moins un signal de microphone (y(n)) en un nombre prédéterminé de sous-bandes afin d'obtenir des signaux de sous-bande de microphone, et pour sous-échantillonner lesdits signaux de sous-bande de microphone selon un premier facteur de sous-échantillonnage (r) afin d'obtenir des signaux de sous-bande de microphone sous-échantillonnés ($y_\mu$(n)) ;
un deuxième banc de filtres d'analyse (15, 15') configuré pour diviser le signal de haut-parleur (x(n)) par ledit nombre prédéterminé de sous-bandes afin d'obtenir des signaux de sous-bande de haut-parleur, et pour sous-échantillonner lesdits signaux de sous-bande de haut-parleur selon un deuxième facteur de sous-échantillonnage ($r_1$) inférieur au premier facteur de sous-échantillonnage (r) afin d'obtenir des premiers signaux de sous-bande de haut-parleur ;
une mémoire configurée pour stocker les premiers signaux de sous-bande de haut-parleur ; et
un moyen de filtrage de compensation d'écho (17 ; 17') configuré pour

a) replier chacun des premiers signaux de sous-bande de haut-parleur avec une estimation de la réponse d'impulsion du système haut-parleur/pièce/microphone dans la sous-bande correspondante pour obtenir des signaux de sous-bande de haut-parleur repliés ;

b) sous-échantillonner chacun des signaux de sous-bande de haut-parleur repliés selon un troisième facteur de sous-échantillonnage ($r_2$) pour obtenir des signaux de sous-bande de contribution d'écho estimés ($\hat{d}_\mu(n)$), le troisième facteur de sous-échantillonnage ($r_2$) étant réglé à une valeur telle que le premier facteur de sous-échantillonnage (r) est le produit des deuxième ($r_1$) et troisième ($r_2$) facteurs de sous-échantillonnage ;

c) sous-échantillonner chacun des premiers signaux de sous-bande de haut-parleur stockés selon ledit troisième facteur de sous-échantillonnage ($r_2$) pour obtenir des deuxièmes signaux de sous-bande de haut-parleur ; et

d) soustraire chacun des signaux de sous-bande de contribution d'écho estimés ($\hat{d}_\mu(n)$) de son signal de sous-bande de microphone sous-échantillonné ($y_\mu(n)$ correspondant pour obtenir des signaux de sous-bande d'erreur ($e_\mu(n)$) ;

et dans lequel le moyen de filtrage de compensation d'écho est également configuré pour mettre à jour l'estimation de la réponse d'impulsion du système haut-parleur/pièce/microphone dans chaque sous-bande sur base du deuxième signal de sous-bande de haut-parleur correspondant, à une fréquence égale à la fréquence d'échantillonnage desdits deuxièmes signaux de sous-bande de haut-parleur.

**10.** Moyen de traitement de signal selon la revendication 9, comprenant en outre un banc de filtres de synthèse (19) configuré pour suréchantillonner et synthétiser les signaux de sous-bande d'erreur ($e_\mu(n)$) afin d'obtenir un signal de microphone amélioré ($\hat{s}(n)$).

**11.** Moyen de traitement de signal selon la revendication 9, comprenant en outre un moyen de filtrage à suppression d'écho résiduel (23) et/ou un moyen de filtrage à réduction de bruit (23) configurés pour filtrer les signaux de sous-bande d'erreur ($e_\mu(n)$).

**12.** Moyen de traitement de signal selon l'une des revendications 9 à 11, dans lequel les premier et deuxième bancs de filtres d'analyse (12, 12', 15, 15') et le banc de filtres de synthèse (19) comprennent chacun de multiples filtres par racine carrée à fenêtre de Hann.

**13.** Moyen de traitement de signal selon l'une des revendications 9 à 11, dans lequel les premier et deuxième bancs de filtres d'analyse (12, 12', 15, 15') et le banc de filtres de synthèse (19) comprennent chacun de multiples filtres à fenêtre de Hann, dans lequel les filtres à fenêtre de Hann des premier et deuxième bancs de filtres d'analyse (12, 12', 15, 15') sont élevés à la puissance d'un premier nombre rationnel prédéterminé et les filtres à fenêtre de Hann du banc de filtres de synthèse (19) sont élevés à la puissance d'un deuxième nombre rationnel prédéterminé, de telle sorte que la somme des premier et deuxième nombres rationnels est égale à 1.

**14.** Moyen de traitement de signal selon l'une des revendications 9 à 13, dans lequel la mémoire est une mémoire tampon circulaire.

**15.** Système pour la compensation d'écho d'un nombre M de signaux de microphone comprenant chacun une contribution de signal d'écho dû à un signal de haut-parleur, le système comprenant

un moyen de traitement de signal selon la revendication 9 ou 14 pour chacun des M signaux de microphone, fournissant ainsi un nombre M de signaux de sous-bande d'erreur ($e_{\mu,k}(n)$) dans chaque sous-bande ; et

un moyen de formation de faisceau (22) adapté pour former un faisceau à partir des signaux de sous-bande d'erreur ($e_{\mu,k}(n)$) de chaque sous-bande, fournissant ainsi un nombre de signaux de sous-bande d'erreur formés dans un faisceau.

**16.** Système selon la revendication 15, dans lequel le moyen de formation de faisceau (22) est un formateur de faisceau à retard-somme ou un annulateur de lobes latéraux généralisé.

**17.** Système de téléphonie mains-libres comprenant un moyen de traitement de signal selon l'une des revendications 9 à 14 ou un système selon l'une des revendications 15 à 16.

**18.** Moyen de reconnaissance vocale comprenant un moyen de traitement de signal selon l'une des revendications 9 à 14 ou un système selon l'une des revendications 15 à 16.

**19.** Système de dialogue vocal ou de commande vocale comprenant un moyen de reconnaissance vocale selon la revendication 18.

**20.** Système de communication pour véhicule comprenant au moins un microphone, au moins un haut-parleur et un moyen de traitement de signal selon l'une des revendications 9 à 14, ou comprenant un système de téléphonie mains-libres selon la revendication 17.

convert microphone signal to down-sampled microphone sub-band signals ⟋1

↓

convert reference audio signal to down-sampled reference sub-band signals (1st stage of down-sampling) ⟋2

↓

store down-sampled reference sub-bank signals in ring buffer ⟋3

↓

down-sample corresponding to down-sampled microphone sub-band signals (2nd stage of down-sampling) ⟋4

↓

estimate sub-band echoes ⟋5

# FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006062380 A1
- WO 9317510 A

### Non-patent literature cited in the description

- **E. Hänsler ; G. Schmidt.** Acoustic Echo and Noise Control. John Wiley & Sons, 2004
- **Griffiths, L.J. ; Jim, C.W.** An alternative approach to linearly constrained adaptive beamforming. *IEEE Transactions on Antennas and Propagation,* 1982, vol. 30, 27
- **H. L. van Trees.** Optimum Array Processing, Part IV of Detection, Estimation, and Modulation Theory. Wiley & Sons, 2002